# EUROPEAN PATENT SPECIFICATION

(11) **EP 2 726 750 B1**
(45) Date of publication and mention of the grant of the patent: **28.10.2015**
(21) Application number: 11729975.0
(22) Date of filing: 30.06.2011
(51) Int. Cl.: F16C 23/04, F16C 25/06, F16C 27/02

(54) **SPHERICAL PLAIN BEARING WITH CONSTANT TORQUE**
GLEITKUGELLAGER MIT KONSTANTEM DREHMOMENT
PALIER LISSE SPHÉRIQUE À COUPLE CONSTANT

(43) Date of publication of application: 07.05.2014
(73) Proprietor: Schaublin SA, 2800 Delemont (CH)
(72) Inventor: Charmillot, Philippe, CH-2832 Rebeuvelier (CH)
(74) Representative: Israelsson, Stefan
(86) International application number: PCT/EP2011/061013
(87) International publication number: WO 2013/000517

(56) References cited:
- EP-A2- 1 645 760
- DE-A1- 3 039 023
- DE-A1- 3 612 949
- FR-A- 975 238
- GB-A- 1 062 976
- US-A- 2 270 392

## Description

### Technical Field

The present invention is generally related to bearings and is more particularly directed to spherical plain bearings having contacting surfaces that, when the contacting surfaces engage and move relative to each other, exert substantially constant torque values.

### Background

Spherical plain bearings have traditionally been comprised of a ball positioned for rotational movement in an outer race. The outer race defines an inner surface contoured to receive and retain the ball therein. In cases in which the ball and the outer race are each metallic, a lubricant may be provided between the rounded outer surface of the ball and the inner concave surface of the outer race to allow the bearing to be operable for extended periods of time. In other cases, the contacting surfaces of the ball and the outer race may comprise dissimilar materials, one of which may be inherently lubricous.

DE 3612949 A1, cf. preamble of claim 1, discloses an articulated sliding bearing with an inner ring and an outer ring which are located one on the other with spherical sliding surfaces. The outer ring or the inner ring is of two-part design and the ring parts of the outer ring being moved towards one another by spring force or the ring parts of the inner ring being spread apart by spring force.

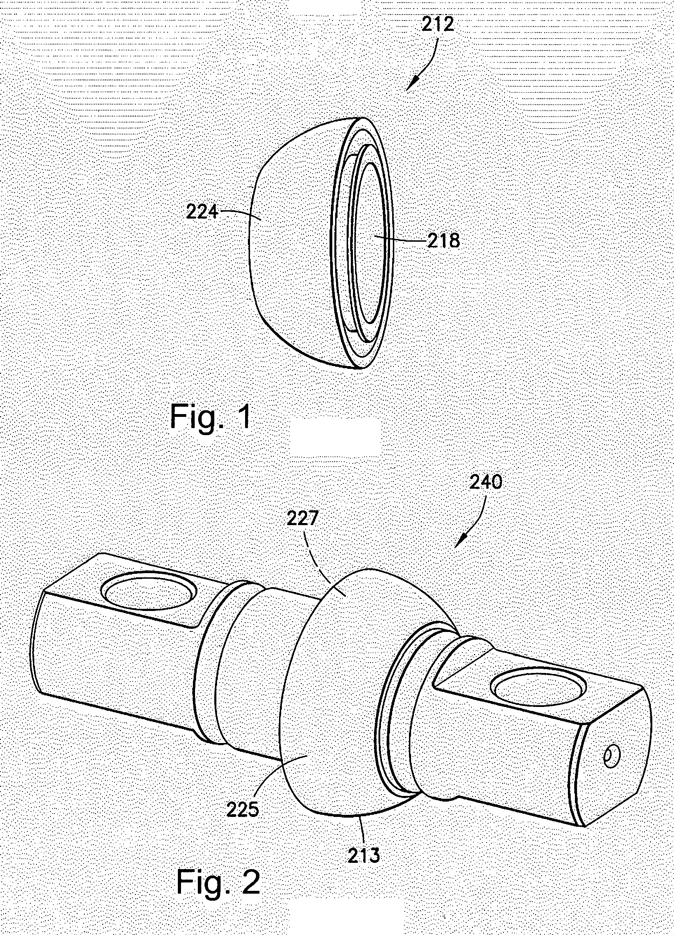

DE 7521859.6 U discloses an encased slide bearing which, inter alia, comprises a plate washer 7a (see Fig. 1).

### Summary

A spherical plain bearing according to the invention is defined in claim 1.

The spherical plain bearing comprises a shaft having a flared protrusion that is substantially hemi-spherical in shape and has a receiving face located thereon. A spring washer is located on the shaft and engages the receiving face. A ball half has a bore extending therethrough for receiving the shaft. A portion of the ball half abuts the spring washer such that the flared protrusion and the ball half cooperate to substantially define a ball. The ball is positioned within an outer race and rotatably engages an inner engagement surface thereof.

Accordingly, when the ball slides and/or rotates relative to the outer race, the outer diameter of the ball varies (at least in the axial direction along the shaft). This variation results in the maintenance of a substantially constant torque during operation of the spherical plain bearing.

In the bearing described herein, the geometry of the ball is variable during use of the bearing to maintain a substantially constant pressure on the inner surface of the race. In maintaining the pressure substantially constant, constant torque can be maintained during operation of the spherical plain bearing.

### Brief Description of the Figures

FIG. 1 is a perspective view of a ball half of an embodiment of the spherical plain bearing of the present invention.
FIG. 2 is a perspective view of a shaft for use with the bearing of FIG. 1.
FIG. 3 is a sectional view of the bearing of FIG. 1 located on the shaft of FIG. 2.

### Detailed Description

As is shown in FIGS. 1-3, an embodiment of a spherical plain bearing of the present invention is generally designated by the reference number 210 and is hereinafter referred to as "bearing 210." Bearing 210 allows constant torque to be maintained upon movement of the parts of the bearing relative to the shaft.

Bearing 210 includes the shaft 240 having a flared protrusion 213 located intermediate the ends of the shaft. Bearing 210 also includes a ball half 212 (FIG. 1) defined by a portion, slice, or section of a sphere or otherwise having a substantially hemi-spherical shape with a spherical outer surface 224 and a bore 218 through which the shaft 240 can be received. The flared protrusion 213 on the shaft 240 (FIG. 2) corresponds substantially to a mirror image of the ball half 212 and has a corresponding substantially hemi-spherical shape with a spherical surface 225. The flared protrusion 213 includes a receiving face 227.

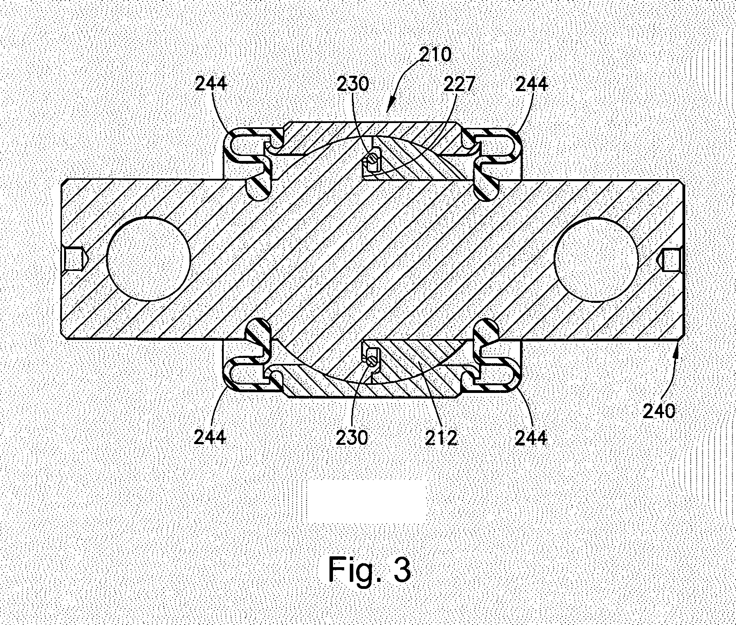

Referring now to FIG. 3, assembly of the bearing 210 comprises locating a spring washer 230 on the flared protrusion 213 of the shaft 240 and against the receiving face 227 and locating the ball half 212 against the spring washer 230, thereby substantially defining a ball. An optional seal boot 244 may be attached to the outer race 214 and the shaft 240, thereby sealing the outer race and the ball half 212 on the shaft 240.

Although this invention has been shown and described with respect to the detailed embodiment thereof, it will be understood by those skilled in the art that various changes may be made without departing from the scope of the invention. In addition, modifications may be made to adapt a particular situation or material to the teachings of the invention without departing from the scope thereof. Therefore, it is intended that the invention not be limited to the particular embodiment disclosed in the above detailed description, but that the invention will include all embodiments falling within the scope of the appended claim.

## Claims

1. A spherical plain bearing (210), comprising:
a flexible ball (212, 213) having a bore (218) extending at least part way therethrough; and
an outer race having an inner engagement surface contoured to a shape complementary to an outer surface (224, 225) of the flexible ball (212, 213);
the flexible ball (212, 213) being positioned within the outer race and slidably and rotatably engaged with the inner engagement surface; and
wherein upon sliding and rotating motion of the flexible ball (212, 213) relative to the inner engagement surface of the outer race, a diameter of the flexible ball (212, 213) is variable and a substantially constant torque can be maintained in the spherical plain bearing (210), **characterized in that** the spherical plain bearing (210) further comprises:
a shaft (240) positioned in the bore (218) and comprising a flared protrusion (213) extending from a portion of the shaft (240) intermediate ends of the shaft (240), the flared protrusion (213) being substantially hemi-spherical in shape and having a receiving face (227) located thereon; and
a spring washer (230) located on the shaft (240) and against the receiving face (227);
wherein a portion (212) of the flexible ball (212, 213) is substantially hemi-spherical in shape and has a spherical outer surface and a bore extending therethrough, the portion (212) of the flexible ball (212, 213) being located on the shaft (240) and against the spring washer (230) such that the flared protrusion (213) and the substantially hemi-spherical portion (212) of the flexible ball (212, 213) substantially define the flexible ball (212, 213).

## Patentansprüche

1. Kugelförmiges Gleitlager (210), umfassend:
eine flexible Kugel (212, 213) mit einer Bohrung (218), die sich wenigstens teilweise durch dieselbe hindurch erstreckt; und
einen äußeren Laufring mit einer inneren Eingriffsfläche, die so konturiert ist, dass sie eine Form aufweist, die zu einer äußeren Oberfläche (224, 225) der flexiblen Kugel (212, 213) komplementär ist;
wobei die flexible Kugel (212, 213) innerhalb des äußeren Laufrings angeordnet ist und gleitfähig und drehbar mit der inneren Eingriffsfläche in Eingriff steht; und
wobei bei einer Gleit- und Drehbewegung der flexiblen Kugel (212, 213) bezogen auf die innere Eingriffsfläche des äußeren Laufrings ein Durchmesser der flexiblen Kugel (212, 213) veränderlich ist und in dem kugelförmigen Gleitlager (210) ein im Wesentlichen konstantes Drehmoment aufrechterhalten werden kann, **dadurch gekennzeichnet, dass** das kugelförmige Gleitlager (210) weiterhin umfasst:
eine Welle (240), die in der Bohrung (218) angeordnet ist und eine Aufweitung (213) umfasst, die von einem Abschnitt der Welle (240) zwischen Enden der Welle (240) ausgeht, wobei die Aufweitung (213) im Wesentlichen halbkreisförmig ist und eine darauf befindliche Aufnahmefläche (227) aufweist; und
einen Federring (230), der sich auf der Welle (240) befindet und gegen die Aufnahmefläche (227) angeordnet ist;
wobei ein Abschnitt (212) der flexiblen Kugel (212, 213) im Wesentlichen halbkreisförmig ist und eine kugelförmige äußere Oberfläche und eine sich durch dieselbe hindurch erstreckende Bohrung aufweist, wobei sich der Abschnitt (212) der flexiblen Kugel (212, 213) auf der Welle (240) befindet und gegen den Federring (230) angeordnet ist, so dass die Aufweitung (213) und der im Wesentlichen halbkreisförmige Abschnitt (212) der flexiblen Kugel (212, 213) im Wesentlichen die flexible Kugel (212, 213) definieren.

## Revendications

1. Palier lisse sphérique (210), comprenant :
une bille flexible (212, 213) avec un trou (218) s'étendant au moins en partie au travers de celle-ci ; et
une bague de roulement extérieure présentant une surface d'engagement intérieure dont le contour possède une forme complémentaire à une surface extérieure (224, 225) de la bille flexible (212, 213) ;
la bille flexible (212, 213) étant positionnée dans la bague de roulement extérieure et
engagée de manière à pouvoir coulisser et tourner avec la surface d'engagement intérieure ; et
dans lequel suite au mouvement de coulissement et de rotation de la bille flexible (212, 213) par rapport à la surface d'engagement intérieure de la bague de roulement extérieure, un diamètre de la bille flexible (212, 213) est variable et un couple sensiblement constant peut être maintenu dans le palier lisse sphérique (210),
**caractérisé en ce que** le palier lisse sphérique (210) comprend en outre :
une tige (240) positionnée dans le trou (218) et comprenant une saillie évasée (213) s'étendant à partir d'une partie de la tige (240) intermédiaire entre les extrémités de la tige (240), la saillie évasée (213) étant sensiblement de forme hémisphérique et présentant une face de réception (227) située dessus ; et
une rondelle-ressort (230) située sur la tige (240) et contre la face de réception (227) ;
dans lequel une partie (212) de la bille flexible (212, 213) est sensiblement de forme hémisphérique et présente une surface extérieure sphérique et un trou s'étendant au travers de celle-ci, la partie (212) de la bille flexible (212, 213) étant située sur la tige (240) et contre la rondelle-ressort (230) de sorte que la saillie évasée (213) et la partie sensiblement hémisphérique (212) de la bille flexible (212, 213) définissent sensiblement la bille flexible (212, 213).
